# FASCICULE DE BREVET EUROPEEN

(11) **EP 4 563 419 B1**
(45) Date de publication et mention de la délivrance du brevet: **15.07.2026**
(21) Numéro de dépôt: 24206020.0
(22) Date de dépôt: 11.10.2024
(51) Int. Cl.: B60T 7/04, B60T 7/06, G01L 5/22, G05G 1/38

(54) **PATIN DE FREINAGE À COMMANDE ÉLECTRONIQUE**
BREMSPLATTE MIT ELEKTRONISCHER STEUERUNG
BY WIRE CONTROLLED BRAKE PAD

(30) Priorité: 01.12.2023 FR 2313425
(43) Date de publication de la demande: 04.06.2025
(73) Titulaire: Robert Bosch GmbH, 70442 Stuttgart (DE)
(72) Inventeur: Anderson, Chris, 75002 Paris (FR)

(56) Documents cités:
- CN-A- 113 844 417
- CN-U- 202 463 793
- DE-U1- 202007 000 827
- SU-A3- 1 648 246
- US-A- 5 934 152
- US-A1- 2006 053 957
- US-B2- 11 560 127

## Description

### 1 DOMAINE DE L'INVENTION

La présente invention se rapporte à un dispositif de commande de frein à liaison par câble électrique pour le système de freinage d'un véhicule automobile.

### ETAT DE LA TECHNIQUE

Les constructeurs se tournent de plus en plus vers les fonctions de commande par fil qui étaient traditionnellement assurées par des liaisons mécaniques par des pédales, articulées. Or, les commandes électriques permettent de réduire, de manière significative, la taille des composants et d'avoir plus de place pour d'autres éléments du véhicule.

On connaît déjà différents concepts de patins ou de pédales. Certains utilisent la force comme seul moyen de commande sans déplacement mécanique et d'autres utilisent la force avec le déplacement pour assurer un meilleur contrôle et permettre l'utilisation de capteurs de position en plus des capteurs de force pour améliorer la fiabilité.

Certains principes sont fondés sur des pédales articulées de type cinématique et d'autres sur le déplacement linéaire par rapport à un plan de guidage. Ces deux solutions présentent des avantages et des inconvénients. Les dispositifs de type pédale sont nécessairement encombrants, mais assurent un meilleur confort pour le conducteur. Les dispositifs « linéaires » de type poussoir sont plus compacts, mais ont l'inconvénient de dépendre du frottement résultant du décalage de la poussée d'entrée appliquée par le conducteur.

Les documents suivants US 2006/053957 A1, US 11 560 127 B2, CN 202 463 793 U et US 5 934 152 A peuvent être cités comme art antérieur.

### BUT DE L'INVENTION

La présente invention a pour but de développer un dispositif de commande du freinage par fil d'un véhicule, sans liaison mécanique entre le dispositif de commande constitué par un patin actionné par le conducteur et le système de freinage du véhicule réduisant l'encombrement, la complexité et améliorant le confort du conducteur notamment la sensation de pédale et l'effet de freinage ressenti ainsi que les capacités de commande et la souplesse.

### EXPOSE ET AVANTAGES DE L'INVENTION

A cet effet, l'invention a pour objet un dispositif de commande de freinage d'un véhicule automobile comprenant : une embase, plate avec des paliers pour un axe, un patin monté sur l'axe au-dessus de l'embase, pour recevoir la poussée du pied du conducteur, un ressort de torsion dont le corps est emmanché librement sur l'axe et dont une branche est reliée au patin pour suivre le mouvement de pivotement sur l'axe, l'autre branche, active, s'appuyant par son extrémité sur le dessus de l'embase, une plaquette souple tenue par le dessus de l'embase sous l'extrémité d'appui de la branche active, un capteur d'effort sous la plaquette recevant la poussée de la branche active par l'intermédiaire de la plaquette, et un circuit de traitement recevant le signal du capteur pour le traiter et fournir le signal traité à l'unité centrale générant le signal de commande appliqué au système de freinage.

Le dispositif selon l'invention a l'avantage de limiter le déplacement du patin par la broche tournant autour de son axe. On évite ainsi les effets du frottement liés au décalage de l'application de la poussée sur le patin grâce au bras de levier du point d'application de la poussée sur le patin et son axe de rotation. Le mouvement se fait en douceur sans effet de glissement par opposition à un déplacement linéaire de type bouton-poussoir. En effet, le guidage linéaire sensible à la contamination de l'environnement demande une protection appropriée sous la forme d'un élément comprimable ou un moyen permettant de recevoir la course. Les mécanismes à articulation, moins sensibles, nécessitent moins de protection, ce qui facilite l'isolation et la protection des composants électroniques, dans la partie inférieure du châssis. En outre, les systèmes de type à compression linéaire ont un ressort de compression pour répondre aux caractéristiques demandées. De tels ressorts ont un encombrement vertical important pour fournir la poussée demandée et assurer la fiabilité. Or, la combinaison selon l'invention de ressorts de compression à un déplacement angulaire du patin facilite l'intégration de la fonction de ressort dans une conception plus compacte, voire très compacte.

Suivant une autre caractéristique, le dispositif comprend un capteur de rotation combiné au patin pour détecter le mouvement de pivotement du patin par rapport à l'embase et fournir un signal transmis au circuit de traitement.

Suivant une autre caractéristique, le dispositif de commande comprend un ressort de torsion dédoublé, associé par sa branche active respective à une plaquette souple respective pour chacun des capteurs d'effort, pour fournir deux signaux de détection au circuit de traitement.

### BREVE DESCRIPTION DES DESSINS

La présente invention sera décrite ci-après de manière plus détaillée à l'aide de modes de réalisation d'un dispositif de commande de freinage pour un véhicule automobile selon l'invention représenté dans les dessins annexés dans lesquels :
[Fig. 1] vue de côté d'un exemple de dispositif de commande,
[Fig. 2] vue de dessus schématique du dispositif de la figure 1,
[Fig. 3] vue en coupe d'une variante du dispositif de commande,
[Fig. 4] vue de dessus du dispositif de la figure 3,
[Fig. 5] vue en coupe d'un autre mode de réalisation,
[Fig. 6] vue de dessus du mode de réalisation de la figure 5.

### 1 DESCRIPTION DE MODES DE REALISATION DE L'INVENTION

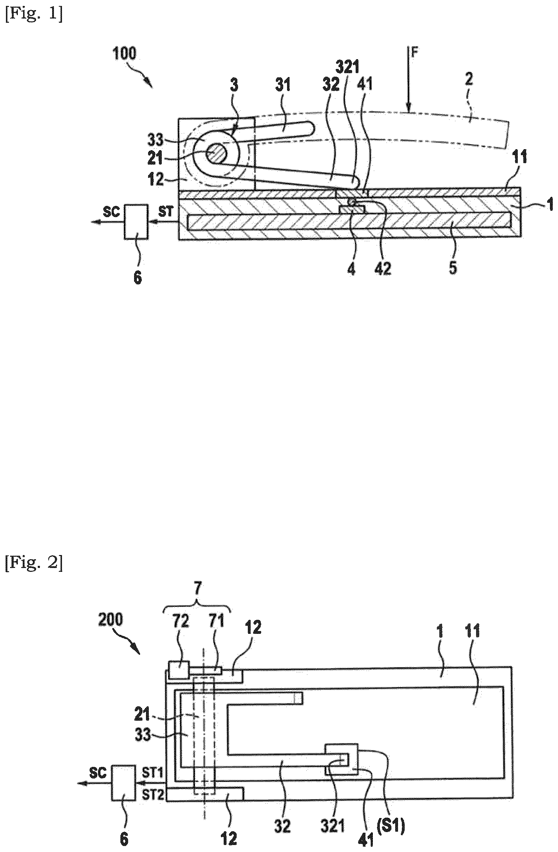

Selon la figure 1, l'invention a pour objet un dispositif de commande de freinage 100 d'un véhicule automobile. Le dispositif 100 se compose d'une embase 1 plate et mince, qui se place au plancher de l'habitacle à la position habituelle d'une pédale de frein ou à une position plus appropriée pour cette forme nouvelle de pédale de frein. Le dispositif 100 est actionné de façon habituelle par une poussée F du pied du conducteur.

L'embase 1 en forme de boîtier plat est munie d'un dessus 11, par exemple, un couvercle portant par un palier 12, l'axe 21 d'un patin 2 recevant la poussée (F) du pied du conducteur. Dans cet exemple, le palier 12 est dédoublé aux deux extrémités de l'axe 21.

Le patin 2 est combiné à un ressort de torsion 3 à deux branches 31, 32, dont le corps 33 est emmanché sur l'axe 21. Une branche 31 est solidaire du patin 2 et l'autre branche 32, active, s'appuie par son extrémité 321 sur un élément souple en forme de plaquette 41 intégrée dans le dessus 11 de l'embase 1 pour recevoir en appui l'extrémité 321 lorsque le patin 2 est soumis à une poussée F.

La plaquette 41 est reliée directement ou par l'intermédiaire d'un poussoir 42 rigide à un capteur d'effort 4 plat, installé dans l'embase 1, sur la plaque d'un circuit imprimé formant le circuit de traitement 5. Le circuit 5 reçoit le signal S1 du capteur 4. Le bras actif 32 plus court que le patin 2 intégrant le bras 31 (ou solidaire à celui-ci) permet d'avoir un patin 2 de dimensions analogues à celles d'une pédale de frein, pour des raisons de confort et de sécurité d'utilisation ; la branche active 32 plus courte que la banche 31 est moins encombrante sur le dessus du couvercle 11. La plaquette 41 constitue la surface de réception de la poussée exercée par l'extrémité 321 du bras actif 32. La poussée exercée ainsi sur la zone de contact de l'extrémité 321 avec la plaquette 41 est assimilable à une poussée perpendiculaire au dessus 11, transmise par le poussoir 42 ; celui-ci n'est qu'un élément intermédiaire de très faible hauteur situé du côté intérieur du couvercle 11 et en contact avec le dessus du capteur 4. Le capteur 4 lui-même est en appui à travers la plaque de circuit 5 contre le fond 11a dans l'embase 1 sans solliciter la plaque du circuit 5. La plaquette 41 rend la transmission de la poussée indépendante de la taille du capteur 4.

Partant du signal S1 reçu du capteur d'effort 4, le circuit 5 forme le signal traité ST fourni à l'unité centrale de gestion 6 générant le signal de commande SC du système de freinage (non représenté) agissant sur les freins de roue et la transmission (freinage dynamique).

Les composants électroniques sensibles du circuit de traitement 5, par exemple, le circuit imprimé, sont protégés par le dessus 11 en forme de couvercle assurant l'étanchéité et intégrant la plaquette 41. Les composants électroniques ne nécessitent pas de déplacement dynamique pour la détection de la poussée par le capteur d'effort 4. Selon une variante, le couvercle 11 est une simple membrane en élastomère ou une plaque rigide avec localement une plaquette 41 souple, intégrée de manière étanche pour ne pas influencer la transmission de la poussée vers le capteur 4.

La vue de dessus (figure 2) montre une variante du dispositif 100 comprenant le ressort de torsion 3 et ses deux branches 31, 32 ainsi que la plaquette souple 41 pour la transmission de la poussée F au capteur d'effort 4 mais qui, en plus du capteur d'effort 4 comporte un capteur de rotation 7 pour détecter la position du patin 2. Cette détection se fait sans contact par un aimant 71 solidaire de l'axe 21 et coopérant avec un élément magnéto-sensible de détection 72, fixe et donnant un signal S2. L'axe 21 est solidaire en rotation du patin 2.

Le circuit de traitement 5 reçoit les signaux S1 et S2 pour former les signaux traités ST1, ST2 transmis à l'unité centrale 6. Le capteur de rotation 7 est, dans une certaine mesure, redondant avec le capteur d'effort 4 pour vérifier la cohérence du signal S1 du capteur. Cette vérification et les conséquences, par exemple, en cas de défaillance du capteur 4, permettent à l'unité de contrôle 6 de commander le système de freinage.

Selon le degré de développement du circuit de traitement 5, les signaux S1, S2 sont combinés selon des règles de combinaison de données pour que le circuit de traitement 5 fournisse un seul signal de sortie ST envoyé à l'unité de commande 6.

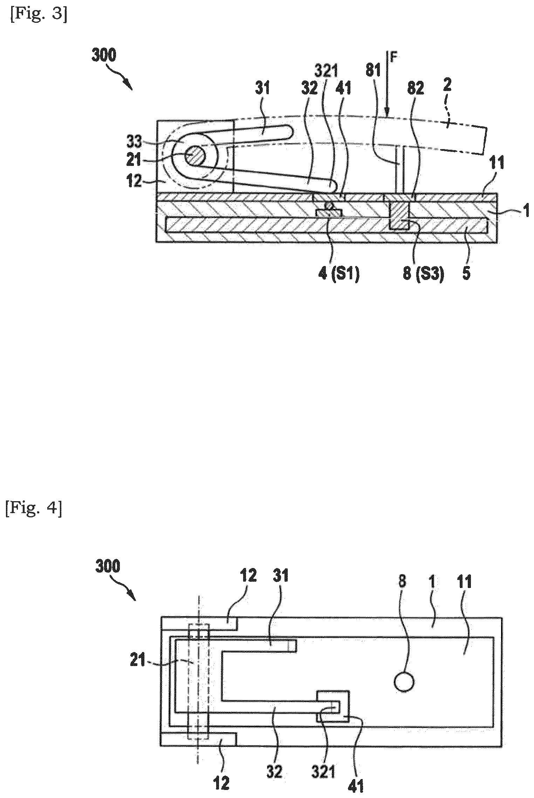

Les figures 3 et 4 montrent un autre mode de réalisation 300 correspondant à celui de la figure 2 complété par un capteur de course 8 coopérant avec une tige 81 solidaire du patin 2 comme cela est représenté schématiquement. Le signal S3 du capteur de course 8 est exploité en parallèle au signal S1 du capteur d'effort 4 pour conforter la validité de ce signal. Cette comparaison permet également de détecter d'éventuels incidents de fonctionnement.

Selon le mode de gestion du freinage, un seul signal traité ST est transmis par le circuit de traitement 5 recevant les deux signaux S1, S2 et tenant compte de ceux-ci selon les règles de leur gestion et prise en compte ou transmission séparément après traitement à l'unité de commande 6.

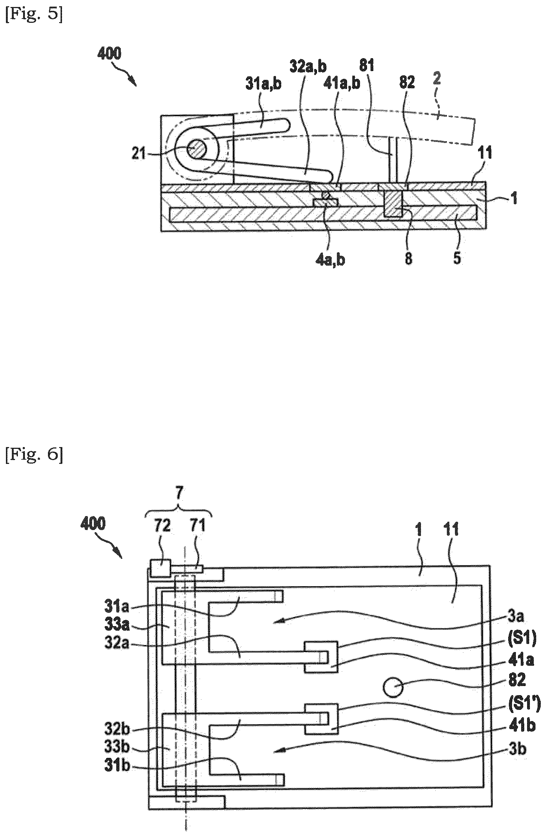

Les figures 5 et 6 montrent une vue en coupe et une vue de dessus d'un dispositif 400 dédoublant le ressort de torsion et le capteur d'effort du premier mode de réalisation 100.

Le ressort de torsion dédoublé, associé à l'axe 21 unique est formé de deux ressorts 3a,b pour actionner deux capteurs d'effort 4a,b par les deux branches actives 32a,b s'appliquant sur deux plaquettes 41a,b ; chacune transmet la poussée F, à un capteur 4a,b situé sous une plaquette 41a,b respective, distincte ; chaque capteur 4a,b fournit un signal S1, S1' au circuit de traitement 5 qui fournit le signal traité, ST à l'unité centrale 6 générant le signal de commande SC du système de freinage. Les signaux S1, S'1 des capteurs peuvent également être traités et fournis séparément à l'unité centrale 6 qui les interprète pour générer le signal de commande SC.

Le dédoublement 4a,b du capteur permet d'utiliser des capteurs plus petits puisqu'ils n'auront à traiter chacun que la moitié de la poussée sur le patin 2. Cette paire de capteurs 4a,b peut être combinée à un capteur de rotation 7 pour détecter le mouvement de pivotement du patin 2 par celui de l'axe 21 dont le patin 2 est solidaire et fournir un signal de contrôle.

De façon générale, les capteurs d'effort 4 simples ou doubles peuvent être combinés à un capteur de rotation 7 ou à un capteur de course 8 ou à leur combinaison selon le niveau de redondance souhaité. Les signaux S1, S1', S2, S3 sont traités par le circuit 15 qui fournit les signaux traités à l'unité centrale 6.

### NOMENCLATURE DES ELEMENTS PRINCIPAUX

100 Dispositif de commande
200 Dispositif de commande
300 Dispositif de commande
400 Dispositif de commande
1 Embase
11 Dessus / couvercle
12 Palier
13 Dessous
2 Patin
21 Axe portant le patin
22 Dessous
23 Dessus
3 Ressort
31 Branche reliée au patin
32Branche active
321 Extrémité
33 Corps du ressort de torsion
4 Capteurs d'effort
41 Plaquette souple
42 Poussoir
5 Circuit de traitement
6 Unité centrale
7 Capteur de rotation
71 Aimant
72 Elément magnéto-sensible fixe
8 Capteur de course
81 Poussoir relié au patin 2
82 Plaquette souple intégrée dans l'embase
F Poussée exercée par le pied du conducteur
S1 Signal du capteur d'effort
S1' Signal du capteur d'effort
S2 Signal du capteur de rotation
S3 Signal du capteur de course
ST Signal traité
SC Signal de commande du système de freinage

## Revendications

1. Dispositif de commande de freinage d'un véhicule automobile comprenant :
- une embase (1), plate avec des paliers pour un axe (21),
- un patin (2) monté sur l'axe (21) au-dessus de l'embase (1), pour recevoir la poussée (F) du pied du conducteur,
- un ressort de torsion (3) dont le corps (33) est emmanché librement sur l'axe (21) et dont
* une branche (31) est reliée au patin (2) pour suivre le mouvement de pivotement sur l'axe,
* l'autre branche (32), active, s'appuyant par son extrémité (321) sur le dessus de l'embase (1), **caractérisé en ce que** ce dispositif de commande de freinage comprend aussi :
- une plaquette souple (41) tenue par le dessus (11) de l'embase (1) sous l'extrémité d'appui (321) de la branche active (32),
- un capteur d'effort (4) sous la plaquette (41) recevant la poussée de la branche active (32) par l'intermédiaire de la plaquette (41), et
- un circuit de traitement (5) recevant le signal (S1) du capteur (4) pour le traiter et fournir le signal traité (ST) à l'unité centrale (6) générant le signal de commande (SC) appliqué au système de freinage.

2. Dispositif de commande selon la revendication 1,
**caractérisé en ce qu'**il comprend :
- un capteur de rotation (7) combiné au patin (2) pour détecter le mouvement de pivotement du patin (2) par rapport à l'embase et fournir un signal (S2) transmis au circuit de traitement.

3. Dispositif de commande selon la revendication 2,
**caractérisé par**
un ressort de torsion (3a, 3b) dédoublé, associé par sa branche active (32a,b) respective à une plaquette souple (41a,b) respective pour chacun des capteurs d'effort (4a,b), pour fournir deux signaux de détection (S1, S1') au circuit de traitement (5).

## Patentansprüche

1. Bremssteuerungsvorrichtung eines Kraftfahrzeugs, beinhaltend:
- eine flache Grundplatte (1) mit Lagern für eine Achse (21),
- eine Platte (2), die oberhalb der Grundplatte (1) an der Achse (21) angebracht ist, um den Schub (F) des Fußes des Fahrers aufzunehmen,
- eine Torsionsfeder (3), deren Körper (33) frei auf die Achse (21) aufgesteckt ist und von der
* ein Arm (31) mit der Platte (2) verbunden ist, um der Schwenkbewegung auf der Achse zu folgen,
* der andere, aktive Arm (32) sich mit seinem Ende (321) auf der Oberseite der Grundplatte (1) abstützt, **dadurch gekennzeichnet, dass** diese Bremssteuerungsvorrichtung ferner Folgendes beinhaltet:
- ein flexibles Plättchen (41), das unter dem Abstützende (321) des aktiven Arms (32) durch die Oberseite (11) der Grundplatte (1) gehalten wird,
- einen Kraftsensor (4) unter dem Plättchen (41), der den Schub des aktiven Arms (32) durch das Plättchen (41) hindurch aufnimmt, und
- eine Verarbeitungsschaltung (5), die das Signal (S1) des Sensors (4) empfängt, um es zu verarbeiten und das verarbeitete Signal (ST) der Zentraleinheit (6) bereitzustellen, die das auf das Bremssystem angewendete Steuerungssignal (SC) erzeugt.

2. Steuerungsvorrichtung nach Anspruch 1,
**dadurch gekennzeichnet, dass** sie Folgendes beinhaltet:
- einen Drehsensor (7), der mit der Platte (2) kombiniert ist, um die Schwenkbewegung der Platte (2) in Bezug auf die Grundplatte zu detektieren und ein Signal (S2) bereitzustellen, das an die Verarbeitungsschaltung übertragen wird.

3. Steuerungsvorrichtung nach Anspruch 2,
**gekennzeichnet durch**
eine doppelt ausgeführte Torsionsfeder (3a, 3b), die durch ihren jeweiligen aktiven Arm (32a, b) mit einem jeweiligen flexiblen Plättchen (41a, b) für jeden der Kraftsensoren (4a, b) assoziiert ist, um der Verarbeitungsschaltung (5) zwei Detektionssignale (S1, S1') bereitzustellen.

## Claims

1. Motor vehicle braking control device comprising:
- a base (1), which is flat and has bearings for a pin (21),
- a pad (2) mounted on the pin (21) above the base (1), for receiving the pushing force (F) from the driver's foot,
- a torsion spring (3), the body (33) of which is fitted freely on the pin (21) and of which
* one arm (31) is connected to the pad (2) so as to follow the pivoting movement about the pin,
* the other arm (32), which is active, bearing by way of its end (321) against the top of the base (1), **characterized in that** this braking control device also comprises:
- a flexible plate (41) held by the top (11) of the base (1) beneath the bearing end (321) of the active arm (32),
- a force sensor (4) beneath the plate (41) receiving the pushing force from the active arm (32) via the plate (41), and
- a processing circuit (5) receiving the signal (S1) from the sensor (4) in order to process it and supply the processed signal (ST) to the central unit (6) generating the control signal (SC) applied to the braking system.

2. Control device according to Claim 1,
**characterized in that** it comprises:
- a rotation sensor (7) combined with the pad (2) for detecting the pivoting movement of the pad (2) with respect to the base and supplying a signal (S2) that is transmitted to the processing circuit.

3. Control device according to Claim 2,
**characterized by**
a double torsion spring (3a, 3b), which is associated by way of its respective active arm (32a, b) with a respective flexible plate (41a, b) for each of the force sensors (4a, b), for supplying two detection signals (S1, S1') to the processing circuit (5).
